# EUROPÄISCHE PATENTSCHRIFT

(11) **EP 0 730 493 B1**
(45) Veröffentlichungstag und Bekanntmachung des Hinweises auf die Patenterteilung: **30.08.2000**
(21) Anmeldenummer: 95922491.6
(22) Anmeldetag: 02.06.1995
(51) Int. Cl.: B01J 13/08, B01J 13/14

(54) **VERWENDUNG EINES POLYMERMATERIALS AUF BASIS MODIFIZIERTER HYDROKOLLOIDE ALS HÜLLMATERIAL**
USE OF A POLYMER MATERIAL BASED ON MODIFIED HYDROCOLLOIDS AS ENCAPSULATING MATERIAL
UTILISATION D'UN MATERIAU POLYMERE A BASE D'HYDROCOLLOIDES MODIFIES COMME MATERIAU D'ENROBAGE

(30) Priorität: 06.06.1994 DE 4419724
(43) Veröffentlichungstag der Anmeldung: 11.09.1996
(73) Patentinhaber: OMNITECHNIK MIKROVERKAPSELUNGS-GMBH, 80993 München (DE)
(72) Erfinder: HINTERWALDNER, Rudolf, D-85665 Moosach-Altenburg (DE); HERTRICH, Bruno, D-80809 München (DE); BABEL, Wilfried, D-69412 Eberbach (DE)
(74) Vertreter: Kinzebach, Werner, Dr.
(86) Internationale Anmeldenummer: EP9502107
(87) Internationale Veröffentlichungsnummer: WO9533554

(56) Entgegenhaltungen:
- EP-A- 0 550 067
- WO-A-91/06286
- WO-A-91/09176
- WO-A-93/20119

## Beschreibung

Gegenstand der Erfindung ist die Verwendung eines Polymermaterials auf Basis modifizierter Hydrokolloide zur Herstellung von Mikrokapseln.

Die gewerbliche Wirtschaft, Industrie und das Hand- und Heimwerk suchen und fordern seit langem vor allem für kritische Arbeitsstoffe Abpacksysteme, mit denen sich diese für das Lagern, Handhaben und dgl. temporär und/oder latent inertisieren lassen. Unter kritischen Arbeitsstoffen werden u.a. gefährliche, brennbare, flüchtige, autoxidable, reaktive, thermosensible, polymerisierbare und/oder toxische Verbindungen verstanden, die z.B. vorzeitig miteinander reagieren, die Umwelt kontaminieren und/oder Mensch und Tier schädigen können. Für den Umgang mit kritischen Arbeitsstoffen gibt es eine Reihe von gesetzlichen Auflagen, sofern sie u.a. unter die Verordnungen über Gefahrstoffe, Gefahrguttransporte, Umwelt und Arbeitshygiene fallen.

Zum temporären Inertisieren von kritischen Arbeitsstoffen bietet sich die Mikroverkapselungstechnologie als ein ideales Abpacksystem an. Unter Mikroverkapselung wird die Einkapselung feindisperser flüssiger und/oder fester Phasen durch Umhüllen mit filmbildenden Polymeren verstanden, die sich nach der Emulgierung und Koazervation oder einer Grenzflächenpolymerisation auf dem einzuhüllenden Material niederschlagen. Die so entstehenden Mikrokapseln besitzen Schutzhüllen und lassen sich zu einem Pulver trocknen. Auf diese Weise können eine Reihe von Arbeitsstoffen in eine "Trockenmasse" umgewandelt werden. Der Mikrokapselinhalt läßt sich dann bei Bedarf durch termische, mechanische, chemische oder enzymatische Einwirkung wieder freisetzen, sofern noch Inhaltsstoffe vorhanden sind. Denn die praktischen Erfahrungen, insbesondere aus technischen Einsatzbereichen, zeigen, daß die bis heute bekannten Mikrokapselwandmaterialien nur für wenige spezifische Kapselinhaltsstoffe diffusionsdicht und damit ausreichend lagerstabil sind. Dies ist auch einer der Gründe dafür, daß sie die Mikroverkapselungstechnologien nur bei einigen wenigen Produktsegmenten, wie z.B. für
a) Farbträger in der Beschichtung von Durchschreibepapieren
b) Arzneimittelpulver mit verderblichen Drogen, für Depotpräparate mit oder ohne Release-Eigenschaften oder Vitaminen
c) Düngemittel, Insektizide, Herbizide, Pestizide und dgl., sowie
d) bei Gewindesicherungsmitteln
durchsetzten. Während bei den Produktsegmenten a) bis c) keine diffusionsdichten Mikrokapselwände erforderlich sind, ist dies bei Gewindesicherungsmitteln eine Grundvoraussetzung.

Um allein Diffusionsdichtigkeiten für Lagerzeiträume von bis zu 3 Monaten erzielen zu können, mußten die Mikrokapselwände in separaten, kostspieligen und zeitaufwendigen Verfahrensschritten mit sekundären oder tertiären Wänden zusätzlich ausgerüstet werden. Solche Maßnahmen führten vielfach zu unbefriedigenden Ergebnissen.

Die Ursachen, die zu undichten Schutzhüllenwänden gegenüber den Inhaltsstoffen führen, sind oftmals vielschichtiger Natur. Sie hängen nicht allein von der Anzahl der Wandschichten, deren Stärken und Eigenschaften ab. zu den bis heute bekannten, essentiellen Ursachenparametern gehören u.a.
- das Härten der Schutzhüllenwände aus Hydrokolloiden mit Aldehyden, das zu Kontraktionen führt
- das Trocknen, das zum zusätzlichen Schrumpf der Schutzhüllenwand beiträgt
- die Requellbarkeit der gehärteten und ungehärteten Schutzhüllenwand in Wasser und in polaren, evtl. wasserhaltigen, organischen Lösemitteln
- Stoffeinschlüsse in der Schutzhüllenwand, die sog. Verhikelbrücken, vor allem in flüssigen Medien, aufbauen
- schlechter Verbund bei 2- und mehrschichtigen Schutzhüllenwänden untereinander.

So sind für den Einsatz im technischen Bereich in der Patentliteratur eine Reihe von mikroverkapselten Produkten beschrieben, jedoch hat die überwiegende Anzahl u.a. wegen fehlender Diffusionsdichte und damit mangelnder Lagerstabilität in die industrielle Praxis keinen Eingang finden können. So wird in der DE-OS 20 27 737 ein härtbares Mehrkomponentenklebstoff- oder Vergußmassensystem beschrieben, bei dem durch komplizierte Überkreuz-Kombinationen von ungesättigten Polyesterharzen und Polyepoxidharzen und deren Härtungsmittel durch die Mikroverkapselungstechnologie praktisch handhabbare Gemische herstellbar sind. Hierbei sind mindestens 4 Reaktionspartner notwendig, so daß die Schutzhüllenwände durch inhomogene Undichtigkeit gekennzeichnet sind. Infolge zu starker Mikrokapselwände ist außerdem keine hohe Kapselzerstörungsquote unter Applikationsbedingungen gesichert. Somit konnte sich dieses System in der gewerblichen Praxis nicht durchsetzen.

In der DE-OS 17 69 353 sind Befestigungs- und Dichtungsmittel beschrieben, die zum Vorbeschichten von Gewindeteilpaarungen eingesetzt werden. Hierbei handelt es sich um ein Epoxidharzklebstoffsystem, bei dem der Reaktionspartner "Epoxidharz" mikroverkapselt in unschmelzbaren Aminoplastpolymerisationshüllen in einem nichtflüchtigen Härtungsmittel vorliegt. Die Verarbeitung dieser Mittel erfolgt aus nicht umwelt- und arbeitshygienefreundlichen Lösemitteln wie z.B. Chlorkohlenwasserstoffen und/oder Aromaten. In diesen Lösemitteln haben die Schutzhüllenwände nur eine beschränkte Lagerstabilität von max. 3 Monaten, weil sie nicht diffusionsdicht und partiell nicht resistent gegenüber den Lösemitteln sind. Deshalb hat sich dieses System nur partiell in der Praxis durchsetzen können.

Zur Herstellung von Schutzhüllenwänden werden eine Vielzahl von polymeren Stoffen vorgeschlagen, wobei die Hydrokolloide neben synthetischen Polymeren eine besondere Stellung einnehmen. Welche Art von Kapselwandmaterial zum Einsatz kommt, wird weitgehendst von der Mikroverkapselungstechnik bestimmt. Diese Verkapselungstechnik läßt sich in
- Lösemittelsysteme und
- wäßrige Systeme
unterteilen. Während die Mikroverkapselung in organischen Lösemitteln aus Gründen der Arbeitssicherheit (eventuell Brand- und Umweltgefahren) ständig an Bedeutung verloren hat, ist das Mikroverkapseln in wäßrigen Medien als universelle Technologie übriggeblieben, sofern dispersionsmittelfrei gearbeitet werden kann.

Bei der Mikroverkapselung in der wäßrigen Phase werden zur Herstellung von Schutzhüllenwänden Hydrokolloide und/oder wasserlösliche synthetische Polymere benötigt. Diese Wandmaterialien sind u.a.: Gelatine, Gummiarabicum, Cellulosederivate, Polysaccharide, Harnstoff- und/oder Melaminharze, Polyurethansysteme und dgl.

Bei allen diesen wäßrigen Mikroverkapselungssystemen ist es entscheidend, daß die zu verkapselnden Stoffe wasserunlöslich, jedoch in Wasser - ohne Schädigung - dispergierbar sind. Des weiteren müssen die zu verkapselnden Stoffe inert gegenüber dem Wandmaterialmedium sein.

Zur Herstellung von mikroverkapselten Stoffen sind folgende Hauptverfahrensschritte notwendig (einfach dargestellt):
- Herstellung einer stabilen Dispersion des zu verkapselnden Stoffes in Wasser
- Herstellung einer kolloidalen Lösung des ausgewählten Wandmaterials
- Zusammenführen der Dispersion und der Lösung und anschließende Auslösung einer Solvation und Koazervation, damit sich die kolloidale Wandmateriallösung um die dispergierten Tröpfchen des zu verkapselnden Stoffes als Solvathülle legen kann.
- Nach dem Ausbilden der Mikrokapseln werden diese vom wäßrigen Medium getrennt und dann gewaschen, geschrumpft und gegebenenfalls mit geeigneten Härtungsmitteln gehärtet und getrocknet. Als Härtungsmittel werden für Hydrokolloide vorzugsweise Aldehyde, insbesondere Glutaraldehyde eingesetzt.

Die WO 93/09176 beschreibt biokompatible Materialien auf Basis von Lipiden, Polykationen oder Polysacchariden, die radikalisch polymerisierbare Gruppen enthalten. Diese Materialien sind zur Herstellung von Mikrokapseln, Wirkstoff freisetzenden Zubereitungen, Bioklebstoffen und Wundverbänden geeignet.

Weitere Einzelheiten zur Mikroverkapselungstechnologie können u.a. den US-A 4 978 483; 2 712 507 und GB-A 751 600; 872 438; 927 157 und 949 910 sowie "Assaji Kondo"/J. Wade von Valkenburg, "Mikrocapsule Processing and Technology", Marcel Dekker Inc., New York - Basel, 1979, entnommen werden.

Trotz überdurchschmittlicher Bemühungen gelang es der Fachwelt nicht, mit diversen Mikroverkapselungstechnologien und konventionellen Wandmaterialien vor allem bei flüssigen Reaktionssystemen einen entscheidenden Durchbruch im Aufbau von lagerstabilen und wasserfesten Schutzhüllenwänden zu erzielen. Erst durch das zusätzliche Ausrüsten mit den vorstehend erwähnten Sekundär- oder Tertiärwänden wurde es partiell möglich, ein solches Ziel zu erreichen. Dadurch stellten sich - infolge der erhöhten Schutzhüllenwandstärken - neue kritische Parameter beim Zerstören der Mikrokapselwände ein. Denn dabei zeigte sich, daß unter Anwendungsbedingungen die Schutzhüllenwände nicht aufbrechbar und zerstörbar sind, weil die zur Zerstörung der Kapseln erforderlichen Drücke, Torsions- und Scherkräfte zu hoch waren. Erst durch den Einsatz von Schutzhüllensprengmitteln, wie sie in DE-B-25 353 319 und 27 10 548 beschrieben sind, boten sich partielle Lösungen für die Praxis an.

Die vorstehend beschriebenen Nachteile und eine Reihe anderer kritischer Parameter sind nur einige der Gründe für die relative Bedeutungslosigkeit der Mikroverkapselungstechnologien zum Abpacken von sensiblen Produkten und Reaktionssystemen und deren Einsatz in diversen Applikationsgebieten in Bereichen der Technik, Pharmazie und Lebensmittel. Aber auch das Fehlen von technischen Konzepten und Innovationen sowie mangelnde Wirtschaftlichkeit waren und sind Hindernisse beim Erschließen von neuen Applikationsgebieten für mikroverkapselte Stoffe.

Aufgabe und Ziel vorliegender Erfindung ist es, ein Hüllmaterial bereitzustellen, das gegenüber der inneren Phase (Kapselinhaltsstoffe) und der äußeren Phase chemisch und physikalisch inert, diffusionsdicht, lagerstabil, wasser- und/oder lösemittelresistent ist.

Es wurde nun gefunden, daß die Verwendung von Hydrokolloiden, die durch Polymerisation härtbar und einfach oder mehrfach durch ethylenisch ungesättigte Reste substituiert sind, zu einem Hüllmaterial mit überlegenen, vorteilhaften Eigenschaften führt.

Somit ist Gegenstand der Erfindung die Verwendung eines oder mehrerer modifizierter Hydrokolloide mit einem Gehalt von ≥ 0,1 Masse-% (m-%) an polymerisierbaren bzw. vernetzbaren Gruppen der allgemeinen Formel 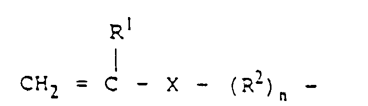 in der
- X: für - COO - , - CONH -, - O - oder - NR³ -
steht;
- R¹: für ein Wasserstoffatom oder C₁-C₄-Alkylrest steht;
- R²: für einen durch eine Hydroxygruppe substituierten Ethylen-, Propylen- oder Butylenrest steht;
- R³: für ein Wasserstoffatom, eine Hydroxygruppe oder einen C₁-C₄-Alkylrest steht und
- n: für 1 steht;
wobei diese Gruppen über ein Bindeglied mit dem Rückgrat des Hydrokolloids verbunden sind und wobei das Hydrokolloid ausgewählt ist unter einem Polypeptid Kollagenen Ursprungs; Kaseinen; Molkenproteinen und Pflanzenproteinen oder einem Hydrolysat davon, zur Herstellung von Mikrokapseln.

Das Polymermaterial dient somit als Mikrokapselwandmaterial. Die durch die erfindungsgemäße Verwendung erhaltenen Mikrokapseln sind zur Abpackung von kritischen Arbeitsstoffen brauchbar.

Unter kritischen Arbeitsstoffen im Sinne der vorliegenden Erfindung sind die eingangs bzw. unten definierten Stoffe sowie pharmazeutische und kosmetische Produkte zu verstehen. Das Polymermaterial ist insbesondere brauchbar als diffusionsdichtes Hüllmaterial zum Schutz der umhüllten Produkte vor äußeren Einwirkungen und vor reaktiven Komponenten sowie zum Schutz der Umgebung vor den Eigenschaften der umhüllten Produkte.

Bei Verwendung als Mikrokapselwandmaterial können insbesondere gefährliche, toxische, brennbare, autoxidable, flüchtige, thermosensible und/oder reaktive Arbeitsstoffe und Reaktionssysteme abgepackt werden. Insbesondere lassen sich polymerisierbare Verbindungen; reaktive Verbindungen, die nach dem Prinzip der Polyaddition härten; der Härtung dienende Verbindungen; (reaktive) Klebstoffe oder Dichtstoffe; Dübelmassen; sensorische, duftende und/oder riechende Stoffe; farbgebende Stoffe, Farbstoffe oder Farben; Anstrichstoffe; Coatings; Vergußmassen, Treib- und Schaummittel; autoxidationsempfindliche Stoffe etc. lagerstabil und diffusionsdicht abpacken.

Unter Reaktionssystemen sind im Sinne der vorliegenden Erfindung u.a. zu verstehen:
- alle 2- und mehrkomponentigen Produkte, die beim bzw. nach dem Zusammenmischen mit- und untereinander reagieren und über Polymerisation, Polyaddition und Polykondenstion vernetzbar sind (Beispiele hierfür sind: Reaktionslacke, Reaktionsklebstoffe und Reaktionsdichtstoffe und/oder
- sich in Abhängigkeit - auch bei einkomponentigen Systemen - von den jeweiligen Umweltbedingungen chemisch und/oder physikalisch verändern, wie z.B. durch Abdampfen von Inhaltsstoffen, Oxidation und dgl.

Speziell bei Reaktionssystemen ist es von besonderer Wichtigkeit, daß die Schutzhüllenwände, insbesondere in flüssigen Medien, diffusionsdicht sind und sich keine Diaphragma- bzw. Membraneigenschaften ausbilden. Dieser kritische Parameter der Diffusionsdichtigkeit ist vor allem dann von essentieller Bedeutung, wenn z.B. bereits sehr kleine Mengen eines Inhaltsstoffes durch Migration und/oder Diffusion durch die Schutzhüllenwand wandern und vorzeitig unerwünschte Reaktionen auslösen können. Dadurch werden unerwünschte Gefahrenmomente unterschiedlichster Art vorprogrammiert und das Produkt kann seinem eigentlichen Einsatzzweck nicht mehr zugeführt werden.

Der Begriff "diffusionsdicht" umfaßt u.a. folgendes.
Kein Austausch von Inhaltsstoffen aus der inneren (Mikrokapselinhalt) in die äußere Phase und umgekehrt durch Diffusion und/ oder Migration während der Lagerung in flüssigen Medien, trockenen Stoffen und/oder in einer gegebenen Umwelt.

Zur Beurteilung und Einstufung der sogenannten Diffusionsdichtigkeit eines Wandmaterials gemäß vorliegender Erfindung ist ein für die industrielle Praxis geeignetes Testverfahren entwickelt worden. Hierbei werden die mikroverkapselten Stoffe für eine vorbestimmte Zeiteinheit "X" in einem geeigneten, inerten Prüfmedium gelagert, darin bewegt und/oder gegebenenfalls erwärmt. Das Prüfmedium ist vorzugsweise ein inertes organisches Lösemittel und/oder Wasser.

Als diffusionsdicht werden solche Wandmaterialien eingestuft, die während der vorgegebenen Zeiteinheit "X" ≤ 5,0, vorzugsweise ≤ 3,0, insbesondere ≤ 1,0 m-% an einem oder mehreren Mikrokapselinhaltstoffen in die inerte äußere Prüfmediumphase diffundieren bzw. migrieren lassen und damit abgeben.

Die diffundierten und/oder migrierten Inhaltstoffe werden dann qualitativ und quantitativ analytisch, z.B. über Gaschromatographie, bestimmt.

Das erfindungsgemäß angewendete Hüllmaterial basiert auf funktionalisierten Hydrokolloiden. Die Ausgangsstoffe zu ihrer Herstellung sind u.a. bekannte und konventionelle Hydrokolloide oder deren Basisrohstoffe. Die chemische Modifikation der Ausgangsstoffe erfolgt durch das Einführen von Seitenketten über reaktive und/oder funktionelle Gruppen in die Hauptmolekülketten, ohne dabei die kolloidchemischen und die wasserlöslichen Eigenschaften zu verändern oder zu schädigen.

Durch den Erhalt der kolloidchemischen und gegebenenfalls der wasserlöslichen Eigenschaften nach der chemischen Modifikation der Hydrokolloide lassen sich die Hüllmaterialien nach konventionellen Methoden, z.B. nach konventionellen Mikrokapseltechniken, einsetzen und verarbeiten. Jedoch besitzen die erfindungsgemäß modifizierten Hydrokolloide zusätzliche Produktparameter, die sich bereits vor, während und/oder nach der Koazervation, beim Härten und/oder Vernetzen positiv auswirken. Sie tragen damit essentiell zum Aufbau und zur Ausbildung von inerten, gegebenenfalls wasserfesten und diffusionsdichten Hüllmaterialien bei.

Die erfindungsgemäßen Hüllmaterialien sind reaktive, biologisch abbaubare Hydrokolloide bzw. Rückgratpolymere. Sie resultieren aus einer zumindest partiellen Derivatisierung der funktionellen Gruppen der erwähnten Ausgangsstoffe, z.B. Hydroxyl-, Kino-, Imino-, Thiol- und/oder Carboxylgruppen, mit einem polymerisierbaren Rest der allgemeinen Formel 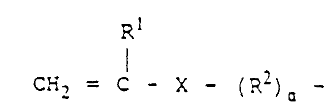 in der X, R¹, R² und n die vorstehende Bedeutung haben,
in einer nicht-radikalischen Reaktion. Die in die Hauptmolekülketten der Hydrokolloide eingeführten Reste gemäß vorliegender Erfindung sind ethylenisch ungesättigte Reste. Diese sind mit den Hydrokolloiden über den Rest R² verbunden. Das Bindeglied zwischen diesem Rest und der Polymer-Hauptkette ergibt sich demnach aus der Reaktion der funktionellen Gruppen des Hydrokolloids mit den entsprechenden reaktiven Gruppen des erwähnten polymerisierbaren Restes.

Bei den erfindungsgemäß verwendeten Hydrokolloid-Derivaten handelt es sich um wasserlösliche Polymermaterialien.

Vorzugsweise ist der Rest R² mit dem Hydrokolloid A über Ether-, Ester- und/oder Iminogruppen verbunden (Y = -O-, -OCO-, -COO- oder -NR⁴). Besonders bevorzugt ist: R¹ = H oder CH₃; X = -COO- oder -O-. Die Funktionalisierung der Hydrokolloide A mit einem oder mehreren reaktiven Resten erfolgt insbesondere über deren Hydroxyl-, Amino-, Imino-, Thiol- und/oder Carboxylgruppen. Die Gehalte an funktionellen Resten im Hydrokolloid A sind ≥ 0,1 m-%. Die besonders bevorzugten Gehalte liegen in Bereich von 1 bis 50 m-%, insbesondere 5 bis 30 m-%.

Bei dem Ausgangsmaterial für die wasserlöslichen, biologisch abbaubaren Hydrokolloide bzw. Rückgratpolymere handelt es sich um Proteine, nämlich Polypeptide kollagenen Ursprungs wie z.B. Gelatine, tierische Leime oder Kollagen; Molkenproteine; Caseine; Pflanzenproteine, insbesondere Sojaproteine; oder ein Hydrolysat davon.

Die Derivatisierung kann durch nichtradikalische Reaktion oder durch Pfropfreaktionen an den Rückgratpolymeren erfolgen.

Erfindungsgemäß bevorzugt sind jedoch die funktionalisierten Rückgratpolymere bzw. Hydrokolloide, bei denen die reaktiven Gruppen über eine nichtradikalische Reaktion in die Hauptmolekülketten eingeführt wurden. Sie tragen wesentlich zu einem homogenen Eigenschaftsspektrum bei, wie überraschend gefunden wurde. Die Herstellung dieser funktionalisierten Produkte erfolgt nach Methoden, die dem Fachmann für die Einführung derartiger Seitenketten bekannt sind. Beispielsweise können die funktionellen Gruppen des Hydrokolloids mit einem reaktiven Derivat des Seitenkettenrestes oder vice versa umgesetzt werden. Hier sind zu erwähnen die Umsetzung von Aminogruppen mit entsprechenden Alkyl halogeniden oder Epoxiden, die Umsetzung von Hydroxygruppen oder Thiolgruppen mit entsprechenden Alkyl halogeniden oder Epoxiden und die Umsetzung von Carboxylgruppen mit Alkoholen oder Epoxiden, etc. Die Herstellung derartiger Polymermaterialien ist beispielsweise in der DE-A-42 10 334 beschrieben, auf die hiermit Bezug genommen wird. Demnach sind zum Funktionalisieren eine Vielzahl von ungesättigten, insbesondere acryl-, Methacryl- und allylgruppentragenden Verbindungen gemäß vorstehender Formel geeignet. Besonders bevorzugt sind solche reaktiven Reste, die über Acrylsäureglycidylester oder Methacrylsäureglycidylester in das Hydrokolloid A eingeführt werden.

Die für die Härtung erforderliche Polymerisation kann durch Homopolymerisation eines die ungesättigten Reste enthaltenden Hydrokolloid-Derivates aber auch durch Copolymerisation eines Gemisches solcher Derivate erfolgen.

Die zur Härtung erforderliche Polymerisation bzw. Copolymerisation erfolgt durch Zugabe bzw. Untermischen, durch Besprühen, Coaten und/oder in einem Bad mit den für Systeme dieser Art erforderlichen Reaktionsinitiatoren. Hierzu gehören u.a.
- anorganische Perverbindungen wie z.B. Wasserstoffperoxid, Alkali- und Erdalkaliperoxide, Persulfate, Percarbonate
- organische Peroxide wie z.B. Methylethylketonperoxide, Cyclohexanperoxide, Dibenzoylperoxide, p-Chlorbenzoylperoxid, Acetylacetonperoxid, Cumolhydroperoxid und andere Polymerisationen auslösende Initiatoren.

Aber auch energiereiche Strahlen wie z.B. UV-Strahlen in Gegenwart eines Photoinitiators oder Elektronenstrahlen können die Polymerisation und Copolymerisation starten.

Ferner können die Polymerisation und Copolymerisation nach Zusatz eines oder mehrerer Reaktionsinitiatoren durch Zusatz eines Beschleunigers beschleunigt werden, um sie auch bei tieferen Temperaturen durchführen zu können. Hierzu sind Beschleuniger u.a. auf der Grundlage von Schwermetallsalzen wie z.B. Cobaltacetylacetonat, Vanadiumnaphthenat, tertiäre Amine wie z.B. Diethylanilin, Diethyl-p-toluidin, Triethanolamin geeignet.

Die erfindungsgemäßen funktionalisierten Hydrokolloide lassen sich durch weitere Zusätze modifizieren. Geeignete Zusatzstoffe sind u.a. Weichmacher, Farbstoffe, Pigmente, anorganische und/oder organische Füllstoffe und Fasern. Ferner können Stabilisatoren und/oder Inhibitoren zugesetzt werden.

Besonders bevorzugt kann der Einsatz von Gemischen aus den erfindungsgemäßen Hydrokolloiden mit nichtfunktionalisierten Hydrokolloiden sein, wenn die Hüllmaterialien spezifische Funktionen wie z.B. partielle Quellbarkeit in Wasser, zu erfüllen haben, wie überraschenderweise gefunden wurde.

In einer Reihe von Einsatzfällen müssen die Hüllmaterialien, insbesondere die Mikrokapselwände, stärker gegen spezifische chemische und/oder Umwelteinflüsse inertisiert sein als dies mit der erfindungsgemäßen Polymerisatvernetzung erzielbar ist. Um dieses Ziel - in Abhängigkeit der jeweiligen Medien - zu erreichen, können die übrigen, im Hydrokolloid vorhandenen, funktionellen Gruppen partiell oder vollständig mit weiteren der Härtung bzw. Vernetzung dienenden Verbindungen umgesetzt bzw. inertisiert werden. Hierzu gehören u.a. Aldehyde, z.B. Formaldehyd, Acetaldehyd, Glutaraldehyd, aldehydgruppentragende Verbindungen, wie Harnstoff-, Melamin- und/oder Phenolaldehydkondensate, Isocyanate und ihre Prepolymere, wie Thiophosphorsäure-tris(p-isocyanato-phenylester), Diphenylmethan-4,4'-diisocyanat, Hexamethylendiisocyanat.

Des weiteren kann in einzelnen Fällen ein Schrumpfen des Hüllmaterials, insbesondere der Mikrokapselwände, notwendig sein. Dieses Schrumpfen erfolgt nach der Ausbildung der Schutzhüllenwände mittels bekannter, konventioneller Verfahren, wie z.B. mit Natriumsulfatlösungen.

Zur Bildung von Mikrokapseln sind alle Verfahrenstechniken geeignet, bei denen wasserlösliche Hydrokolloide eingesetzt werden können. Hierzu gehören u.a.
- Physikalische Verfahren:: Stationäre Extrusion, zentrifugale Extrusion, rotierendes Tellerverfahren, Sprühtrocknung, Luftsuspensions-Verfahren, Tauchen, Sprühen, Dragieren und dgl.
- Chemische Verfahren:: Grenzflächenpolymerisation, Koazervation, In-Situ-Polymerisation und dgl.

Die Herstellung der Mikrokapseln erfolgt wie eingangs ausgeführt. Das Härten bzw. Vernetzen der Schutzhüllenwände kann kontinuierlich und diskontinuierlich durchgeführt werden. Beim freiradikalischen Härten bzw. Vernetzen werden die Mikrokapseln in ein Bad gegeben, in dem die der Härtung bzw. Vernetzung dienenden Verbindungen gelöst und/oder dispergiert sind. Als Lösemittel sind Wasser und/oder organische Lösungsmittel geeignet, wobei erfindungsgemäß Wasser bevorzugt ist. Die Konzentrationen dieser Härterlösungen sind abhängig von der jeweils gewünschten Härtungszeit und -temperatur. Zur Beschleunigung der freiradikalischen Härtung bzw. Vernetzung können der Härterlösung beschleunigende Verbindungen zugesetzt oder in einem separaten Beschleunigerbad nach der Härtung vorgenommen werden. Die Härtung bzw. Vernetzung der Schutzhüllenwände kann auch durch Aufsprühen der Härter- und/oder Beschleunigerlösungen erfolgen.

Das Härten bzw. Vernetzen der Mikrokapselwände kann auch mit energiereichen Strahlen erfolgen. Beim Härten bzw. Vernetzen mit UV-Strahlen sind den erfindungsgemäßen Hydrokolloiden ein oder mehrere photosensible Verbindungen, wie z.B. Benzoin und Derivate, Benzildimethylketale, l-Hydroxycyclohexyl-phenylketone, Benzophenone, 2,4,6-Trimethylbenzoyldiphenyl-phosphinoxide, allein oder in Verbindung mit amingruppenhaltigen Co-Initiatoren, wie z.B. 2-(Dimethylamino)ethylbenzoate, zuzusetzen. Für das Härten bzw. Vernetzen mit Elektronenstrahlen (ES) werden keine Initiatorenzusätze benötigt. Strahlendosen und Expositionsdauer sind einerseits von den Gehalten an reaktiven Gruppen in den erfindungsgemäßen Hydrokolloiden und andererseits von den Mikrokapselwandstärken und den Inhaltsstoffen der Mikrokapseln abhängig. Die Expositionszeiten liegen dabei im allgemeinen zwischen 1 und 300 Sekunden bei der UV-Vernetzung mit UV-Lampen mit einer Leistung von 80 bis 100 W/cm und bei der ES-Vernetzung zwischen 5 und 70 kGy.

Zum Erzielen von lagerstabilen, wasserresistenten und/oder diffusionsdichten Mikrokapselwänden können duale Härtungen bzw. Vernetzungen angezeigt sein. Unter dualem Härten bzw. Vernetzen gemäß vorliegender Erfindung ist zu verstehen, daß andere in den Hydrokolloiden A vorhandene funktionelle Gruppen, die nach anderen Reaktionsmechanismen reagieren können, während und/oder separat von der freiradikalischen Härtung bzw. Vernetzung mit den hierfür geeigneten der Härtung bzw. Vernetzung dienenden Verbindungen umgesetzt werden. Als Beispiel sei hierfür die peroxidische Härtung bzw. Vernetzung und die Umsetzung von -NH- und/oder OH-Gruppen der Hydrokolloide A mit Isocyanatgruppen in einem oder zwei separaten Arbeitsschritten genannt.

Durch die duale Härtung bzw. Vernetzung lassen sich u.a. zusätzliche hydrophobe Brückenglieder im Schutzhüllenwandmaterial aufbauen, wodurch die Wasserresistenz zusätzlich essentiell erhöht und die Wasserquellbarkeit erheblich reduziert werden kann, wie überraschenderweise gefunden wurde, ohne dabei die Zähelastizität zu verschlechtern.

Mit den erfindungsgemäßen Mikrokapselwandmaterialien lassen sich weitere Aufgaben beim Umhüllen und Schützen von Gasen und Partikeln aus Flüssigkeiten, Pasten und Trockenstoffen lösen und vereinfachen. In Abhängigkeit von den jeweiligen physikalischen und/oder chemischen Mikroverkapselungstechniken lassen sich, vor allem für eine industrielle Fertigung, reproduzierbare Parameter erarbeiten und einstellen, weil die erfindungsgemäßen Hydrokolloide in Vergleich zu den konventionellen Mikrokapselwandmaterialien homogenere Eigenschaften besitzen.

So können z.B. bereits den Lösungen aus den erfindungsgemäßen Mikrokapselwandmaterialien die der Härtung bzw. Vernetzung dienenden Verbindungen zugesetzt werden. Besonders geeignet hierfür sind solche Perverbindungen und/oder Peroxide, die erst bei erhöhten Temperaturen als Initiatoren wirksam werden und somit ausreichende Topfzeiten besitzen. Dies hat den Vorteil, daß die Härtung bzw. Vernetzung sofort nach der Ausbildung der Schutzhüllenwände initiiert werden kann. Die Härtung bzw. Vernetzung kann dadurch beschleunigt werden, indem auf die Schutzhüllenwände eine Lösung aus Reaktionsbeschleunigern aufgesprüht und/oder die Mikrokapseln in ein Beschleunigerbad eingetragen werden.

Das Härten bzw. Vernetzen der Schutzhüllenwände läßt sich auch in gegebenenfalls temperierten Härtungs- und/oder Beschleunigungsbädern durchführen.

Bei den chemischen Mikroverkapselungstechniken, insbesondere beim Koazervationsverfahren, bieten die erfindungsgemäßen Mikrokapselwandmaterialien weitere Vorteile, wie überraschenderweise gefunden wurde. Beim Eintragen einer Lösung aus den erfindungsgemäßen Hydrokolloiden in flüssige Medien mit dispergierten und zu umhüllenden Partikeln bzw. Tröpfchen (stabile Dispersion)
- ziehen die Wandmaterialien schneller auf die dispergierten Partikel bzw. Tröpfchen auf und bilden homogenere Schutzhüllenwände durch Koazervation aus
- die entstehenden Mikrokapselspektren besitzen nach der Gauß'schen Verteilungskurve kleinere Koeffizienten als die mit konventionellen Hydrokolloiden hergestellten Mikrokapseln.

Des weiteren ist beim Einsatz der erfindungsgemäßen Hydrokolloide der Anteil an freien Koazervaten überraschend niedrig, wodurch sich u.a. die Waschzeiten beträchtlich verkürzen.

Ein weiteres wesentliches Merkmal ist die Möglichkeit einer homogenen Härtung bzw. Vernetzung und der Ausbildung von Brückengliedern (Quervernetzung), um zu einer stabileren Kapselwandmatrix zu gelangen. Durch das Härten bzw. Vernetzen werden den erfindungsgemäßen Hydrokolloiden ihre Sol-/Gel-Transformationseigenschaften genommen, was sich u.a. beim Dehydratisieren und Trocknen vorteilhaft auswirkt.

Die erwähnten Punkte, d.h. die schnelle Ausbildung der Schutzhüllen mit den erfindungsgemäßen Hydrokolloiden, die einheitlichen Wandstärken der erhaltenen Mikrokapseln und die Erzielung enger Mikrokapselspektren mit runden und/oder ellipsoiden Mikrokapselformen, sind besondere Vorteile der vorliegenden Erfindung.

Mit vorliegender Erfindung werden weitere essentielle Aufgaben beim Dehydratisieren und Trocknen von Schutzhüllenwänden gelöst. Während beim Dehydratisieren und Trocknen von Schutzhüllen aus konventionellen Hydrokolloiden, die gegebenenfalls nach dem Stand der Technik mit Aldehyden gehärtet sein können, eine Reihe sehr kritischer, wechselnder Parameter gegeben sind, treten diese beim Einsatz der erfindungsgemäßen Wandmaterialien nicht auf. Diese kritischen Parameter sind bei den konventionellen Schutzhüllenwandmaterialien u.a. in der Tatsache begründet, daß sie
- unterschiedliche Härtungsgrade infolge inhomogener Wandstärken besitzen, die mit zum Entstehen innerer Spannungen und damit zur Rißbildung in den Schutzhüllen beitragen
- noch als Gele niedrige Schmelzpunkte infolge der (partiell) vorhandenen Sol-/Gel-Transformationseigenschaften
und
- zu lange Dehydrations- und Trocknungszeiten - oftmals mehrere Tage - bei relativ niedrigen Temperaturen, auch beim Einsatz moderner Trocknungstechniken, besitzen.

Bestehen die Schutzhüllenwände dagegen aus den Hydrokolloiden gemäß vorliegender Erfindung, so lassen sich vorstehende und andere Nachteile nicht nur eliminieren, sondern sie bieten als homogen gehärtete bzw. vernetzte Gele weitere Vorteile, wie überraschenderweise gefunden wurde. Einer dieser erfindungsgemäßen Vorteile ist, daß das Dehydratisieren und Trocknen der gehärteten bzw. vernetzten Schutzhüllengele bei steigenden Temperaturen - in Abhängigkeit der Thermosensitivität der verkapselten Inhaltstoffe - in einem Bruchteil der Zeit wie mit konventionellen Hydrokolloiden bewerkstelligt werden kann. Besonders bevorzugt wird beim Dehydratisieren und Trocknen gemäß vorliegender Erfindung mit konditionierter Trocknungsluft gearbeitet, die eine relative Luftfeuchte ≤ 50 %, insbesondere ≤ 40 %, und Trocknungslufttemperaturen zwischen 20°C und 100°C besitzt.

Unter solchen Bedingungen dehydratisieren und trocknen die erfindungsgemäßen Schutzhüllengele
- kontraktions- und spannungsärmer
- behalten vorzugsweise ihre stabilere runde und/oder elipsoide Form
- evt1. vorhandene reaktive Gruppen können abreagieren.

Des weiteren benötigen die gehärteten bzw. vernetzten Schutzhüllengele gemäß vorliegender Erfindung nur noch einen Bruchteil an Trocknungshilfsmitteln wie z.B. der teuren pyrogenen Kieselsäure, im Vergleich zu den konventionellen Verfahren.

Weiter ist das Polymermaterial zur Beschichtung von Arzneimittelformen, insbesondere Dragees, Kapseln und Tabletten, geeignet. Dabei kann das Polymermaterial so gewählt werden, daß eine magensaftlösliche oder eine magensaftresistente Beschichtung resultiert.

Das Beschichten der Arzneimittelformen erfolgt in üblicher Weise, beispielsweise durch Aufsprühen.

Weiter kann das Polymermaterial auch in Form von Makrokapseln zur Umhüllung der oben genannten Produkte verwendet werden. Hier sind insbesondere Arzneimittelkapseln zu erwähnen. Man verwendet dann vorzugsweise ein Polymermaterial auf Gelatinebasis. Es können sowohl Vollkapseln als auch Steckkapseln hergestellt werden. Die Herstellung der Kapseln erfolgt in üblicher Weise.

Durch die Verwendung der Hydrokolloide gemäß vorliegender Erfindung als Mikrokapselwandmaterialien werden einer modernen Mikroverkapselungstechnologie nicht nur neue Impulse zur wirtschaftlicheren Herstellung von Schutzhüllen mit funktionssicheren Membraneigenschaften und verbesserter Lagerstabilität gegeben, sondern auch die Voraussetzungen geschaffen, sie industriell und gewerblich zu nutzen. Denn gerade lagerstabile, wasserfeste und gegebenenfalls diffusionsdichte Abpacksysteme wie die Mikrokapseln, schaffen die Voraussetzung zum temporären Inertisieren von gefährlichen, toxischen, brennbaren, autoxidablen, flüchtigen, d.h.verdampfenden oder sublimierenden, thermosensiblen und/oder reaktiven Arbeitsstoffen und Systemen. Die gleichzeitig vereinfachte Verfahrenstechnik stellt gleichzeitig eine hohe Wirtschaftlichkeit sicher.

Die Erfindung wird durch folgende Beispiele näher erläutert, ohne jedoch darauf beschränkt zu sein.

Die eingesetzten Wandmaterialien hatten folgende technische Kenndaten:

| **Wandmaterial A** = derivatisierte Gelatine (erfindungsgemäß) | |
|---|---|
| Gallertfestigkeit nach Bloom: | 272 g |
| Viskosität nach Bloom/50°C | 50 mPa.s |
| Gehalt an Glycidylmethacrylat: | 1,7 mMol/g |

| **Wandmaterial B** = unmodifizierte Gelatine (Vergleich) | |
|---|---|
| Gallertfestigkeit nach Bloom: | 272 g |
| Viskosität nach Bloom/50°C: | 50 mPa.s |

### Beispiel 1 (erfindungsgemäß)

In einem doppelwandigen Rührbehälter mit einem Nutzinhalt von 100 Liter und ausgestattet mit einem stufenlos regelbaren Rührwerk wurden
- 40,0 Liter: Wasser und
- 2,0 kg: Wandmaterial A
vorgelegt. Das Wandmaterial A ließ man im kalten Wasser quellen und erwärmt anschließend den Ansatz - ohne Rühren - auf etwa 45°C. Diese Temperatur von 45°C wurde gehalten. Nach dem sich das Wandmaterial A gelöst hatte, wurden bei laufendem Rührwerk 0,5 kg Natriumpolyphosphat und 0,3 kg Natriumacetat zugegeben und homogen untergemischt.

In diese vorbereitete Wandmateriallösung wurden 15 kg Benzoylperoxidpaste, 50 %ig in Dibutylphthalat, gut eindispergiert und die Restwassermenge von 10 Ltr. wurde zugegeben. Unter Rühren wurde der pH-Wert des Ansatzes mittels einer 10 %igen Essigsäure bis zum Koazervationspunkt (ca. pH 4,2) abgesenkt. Anschließend wurde langsam auf eine Temperatur von 10°C gekühlt.

Durch Zusatz einer 5 %igen Natriumhydroxidlösung wurde der pH-Wert auf ca. 5 eingestellt und eine 50 %ige Glutaraldehydlösung zur Vorhärtung der fertigen Wand wurde zugesetzt. Diese Vorhärtung mit der Glutaraldehydlösung dauerte ca. 24 Stunden. Zur weiteren Härtung bzw. Vernetzung der funktionellen Methacrylgruppen des Wandmaterials A wurden dem Ansatz ca. 0,250 kg Natriumperoxodisulfat (Na₂S₂O₈) zugesetzt und durch Rühren homogen gelöst und verteilt. Zur Beschleunigung dieser Reaktion wurden noch 0,250 Liter 50 %iges Triethanolamin zugegeben. Nach einer Rührzeit von ca. 8 Stunden war diese Härtung abgeschlossen.

Anschließend ließ man die entstandenen Mikrokapseln sedimentieren und wusch 3 mal mit frischem Wasser.

Nach dem Waschvorgang wurde ein Trocknungshilfsmittel, z.B. pyrogene Kieselsäure, zugemischt und die Mikrokapselsuspension wurde filtriert.

Der erhaltene nasse Mikrokapselkuchen (60 - 70 % Wassergehalt) wurde anschließend in einem Wirbelbett-Trockner mit steigender Trocknungslufttemperatur von 18°C bis 40°C und einer relativen Luftfeuchte ≤ 40 % getrocknet. Die Trocknungsdauer betrug 18 Stunden. Die erhaltenen Mikrokapseln lagen als einzelne Kapseln vor und waren rieselfähig.

### Beispiel 2 (erfindungsgemäß)

Das Beispiel 1 wurde in der Weise wiederholt, daß anstelle der Benzoylperoxidpaste ein 15 kg Bisphenol-A-dimethacrylat/Trimethyllolpropantrimethacrylat-Gemisch (1:1) verkapselt wurde. Die übrigen Verfahrensbedingungen entsprachen dem Beispiel 1. Die Trocknungsdauer betrug 17 Stunden.

### Beispiel 3 (Vergleich)

Das Beispiel 1 wurde in der Weise wiederholt, daß anstelle von Wandmaterial A das Wandmaterial B eingesetzt wurde.

### Beispiel 4 (Vergleich)

Das Beispiel 2 wurde in der Weise wiederholt, daß anstelle von Wandmaterial A das Wandmaterial B eingesetzt wurde.

### Beispiel 5 (erfindungsgemäß)

Dieses Beispiel unterscheidet sich von den vorstehenden dadurch, daß die Härtung bzw. Vernetzung der Methacrylgruppen im Wandmaterial A mit der beginnenden Koazervation initiiert wird.

Das Beispiel 2 wurde in der Weise wiederholt, daß in der Restwasser-Zusatzmenge von 10 Ltr. vor dem Koazervationsbeginn 0,250 kg Natriumperoxodisulfat gelöst und dann dem Ansatz zugesetzt wurden. Mit dem Koazervationsbeginn wurde auch die Härtung bzw. Vernetzung des Wandmaterials A initiiert. Da die freiradikalische Härtung bzw. Vernetzung im sauren Bereich langsamer erfolgt, bauten sich im Wandmaterial keine Spannungen auf und es ist homogener und stabiler gehärtet. Auf eine Glutaraldehyd-Härtung wurde verzichtet. Ansonsten wurde gemäß Beispiel 1 verfahren.

Die Ergebnisse sind in Tabelle 1 zusammengefaßt.

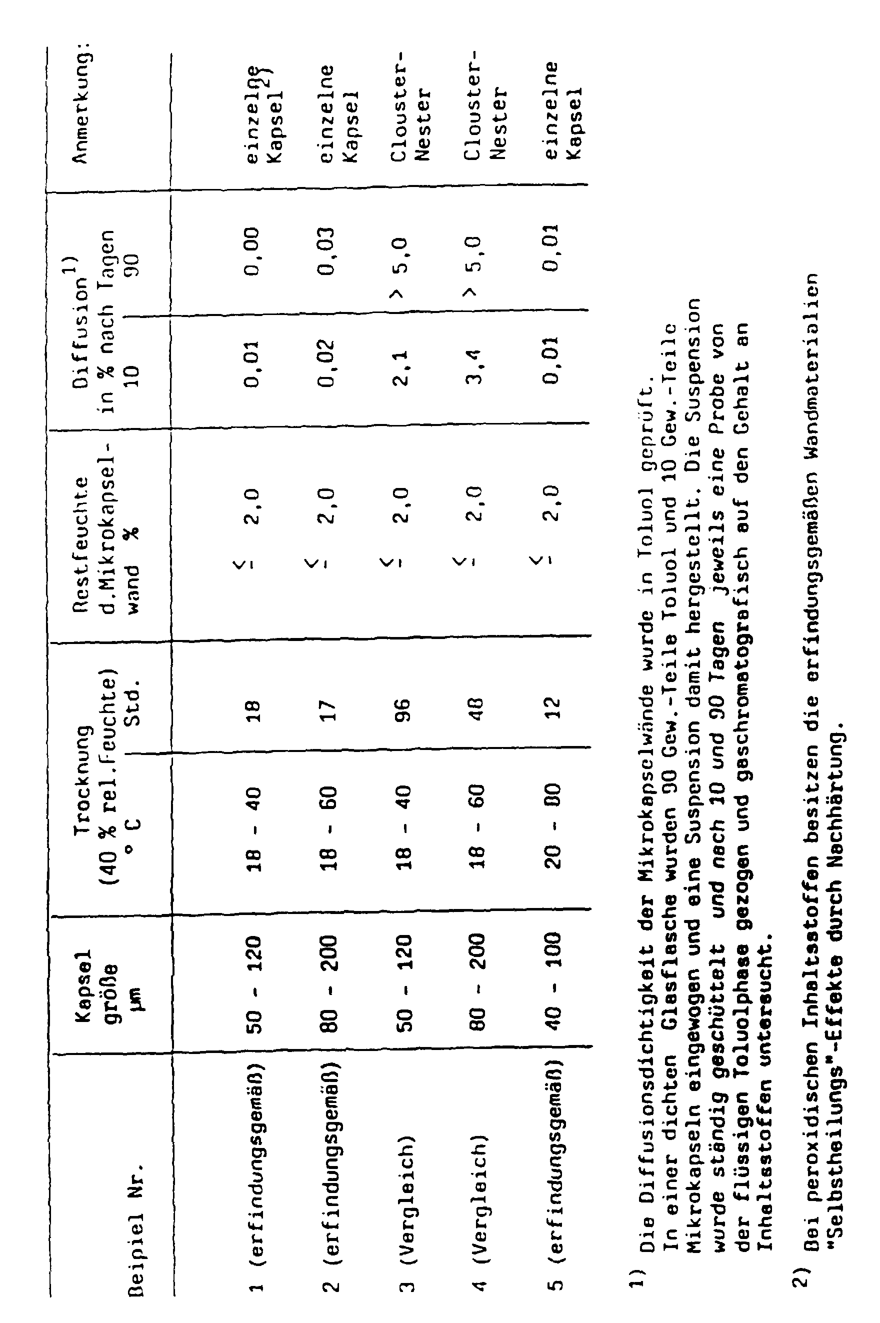

## Patentansprüche

1. Verwendung eines oder mehrerer modifizierter Hydrokolloide mit einem Gehalt von ≥ 0,1 Masse-% (m-%) an polymerisierbaren bzw. vernetzbaren Gruppen der allgemeinen Formel 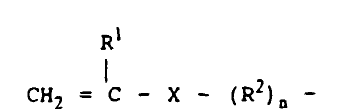 in der
X für - COO - , - CONH -, -O - oder - NR³ -
steht;
R¹ für ein Wasserstoffatom oder C₁-C₄-Alkylrest steht;
R² für einen durch eine Hydroxygruppe substituierten Ethylen-, Propylen- oder Butylenrest steht;
R³ für ein Wasserstoffatom, eine Hydroxygruppe oder einen C₁-C₄-Alkylrest steht und
n für 1 steht;
wobei diese Gruppen über ein Bindeglied mit dem Rückgrat des Hydrokolloids verbunden sind und wobei das Hydrokolloid ausgewählt ist unter einem Polypeptid kollagenen Ursprungs; Kaseinen; Molkenproteinen und Pflanzenproteinen oder einem Hydrolysat davon, zur Herstellung von Mikrokapseln.

2. Verwendung nach Anspruch 1, wobei X in der Formel I für - COO - oder -O - steht.

3. Verwendung nach Anspruch 1 oder 2, wobei die polymerisierbaren bzw. vernetzbaren Gruppen von Glycidylacrylat oder Glycidylmethacrylat stammen.

4. Verwendung nach einem der vorhergehenden Ansprüche, wobei das Bindeglied mit dem Rückgrat des Hydrokolloids eine Gruppe ist, die ausgewählt ist unter - COO -, - O - , - S - und - NR⁴ -.

5. Verwendung nach einem der vorhergehenden Ansprüche, wobei das Hydrokolloid ausgewählt ist unter Gelatine, tierischen Leimen, Kollagen und Sojaproteinen oder einem Hydrolysat davon.

6. Verwendung nach einem der vorhergehenden Ansprüche, wobei im Hydrokolloid mindestens 10 vernetzbare Gruppen pro 1000 Aminosäureeinheiten vorhanden sind.

7. Verwendung nach einem der vorhergehenden Ansprüche, wobei zusätzlich nicht-funktionalisierte Hydrokolloide verwendet werden.

8. Verwendung nach einem der vorhergehenden Ansprüche zur Abpackung von gefährlichen, toxischen, brennbaren, autoxidablen, flüchtigen, thermosensiblen und/oder reaktiven Arbeitsstoffen und Systemen oder von Arzneimitteln.

9. Verwendung nach Anspruch 8 zur Abpackung von polymerisierbaren Verbindungen, insbesondere (meth)acryl-, allyl- und/oder vinylgruppentragende, härtbare Verbindungen;
reaktiven Verbindungen, die nach dem Prinzip der Polyaddition härten, insbesondere epoxid- und/oder isocyanatgruppenhaltigen Verbindungen;
der Härtung dienenden Verbindungen;
reaktiven Kleb- und Dichtstoffen;
sensorischen, duftenden und/oder riechenden Stoffen;
farbgebenden Stoffen und/oder Farbstoffen;
Treib- und Schaummitteln; und/oder
autoxidationsempfindlichen Stoffen.

10. Lagerstabile Mikrokapseln aus einem Polymermaterial auf Basis eines oder mehrerer modifizierter Hydrokolloide wie in einem der Ansprüche 1 bis 7 definiert.

11. Verfahren zur Herstellung von Mikrokapseln, dadurch gekennzeichnet, daß man eines der in den Ansprüchen 1 bis 6 definierten modifizierten Hydrokolloide einer Koazervation und einer anschließenden Polymerisation bzw. Vernetzung, in Anwesenheit des einzukapselnden Materials und ggf. in Anwesenheit von üblichen Zusätzen, in einem wäßrigen Medium unterwirft.

12. Verfahren nach Anspruch 11, dadurch gekennzeichnet, daß zusätzlich eine Härtung der Mikrokapseln vorgenommen wird.

13. Verfahren nach Anspruch 12, dadurch gekennzeichnet, daß eine duale Härtung bzw. Vernetzung vorgenommen wird.

14. Verfahren nach einem der Ansprüche 11 bis 13, dadurch gekennzeichnet, daß man durch Dehydratisierung unter konditionierter Luft mit einer relativen Luftfeuchte ≤ 50 % und Temperaturen zwischen 20°C und 100°C eine Nachhärtung und Trocknung der Mikrokapselwände vornimmt.

15. Lagerstabile Mikrokapseln, erhältlich nach einem Verfahren gemäß einem der Ansprüche 11 bis 14.

## Claims

1. Use of one or more modified hydrocolloids containing ≥ 0.1 % by mass (m-%) of polymerisable or crosslinkable groups of general formula 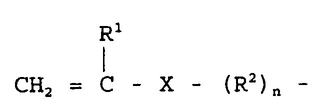 wherein
X denotes -COO-, -CONH-, -O- or -NR³ -;
R¹ denotes a hydrogen atom or C₁₋₄-alkyl group;
R² denotes an ethylene, propylene or butylene group substituted by a hydroxy group;
R³ denotes a hydrogen atom, a hydroxy group or a C₁₋₄-alkyl group and
n denotes 1;
these groups being connected to the backbone of the hydrocolloid via a linking member and the hydrocolloid being selected from among a polypeptide of collagenic origin; caseins; whey proteins and plant proteins or a hydrolysate thereof, for the preparation of microcapsules.

2. Use according to claim 1, wherein X in formula I denotes -COO- or -O-.

3. Use according to claim 1 or 2, wherein the polymerisable or crosslinkable groups originate from glycidyl acrylate or glycidyl methacrylate.

4. Use according to one of the preceding claims, wherein the linking member to the backbone of the hydrocolloid is a group which is selected from among -COO-, -O-, -S- and -NR⁴-.

5. Use according to one of the preceding claims, wherein the hydrocolloid is selected from among gelatins, animal glues, collagen and soya proteins or a hydrolysate thereof.

6. Use according to one of the preceding claims, wherein at least 10 crosslinkable groups per 1000 amino acid units are present in the hydrocolloid.

7. Use according to one of the preceding claims, wherein non-functionalised hydrocolloids are additionally used.

8. Use according to one of the preceding claims for packaging dangerous, toxic, flammable, auto-oxidisable, volatile, heat-sensitive and/or reactive working substances and systems or pharmaceutical preparations.

9. Use according to claim 8 for packaging polymerisable compounds, particularly hardenable compounds containing (meth)acrylic, allyl and/or vinyl groups;
reactive compounds which harden according to the principle of polyaddition, particularly compounds containing epoxy and/or isocyanate groups;
compounds used for hardening;
reactive adhesives and sealing compounds;
sensory, fragrant and/or odoriferous compounds;
colourings and/or dyestuffs;
propellants and foaming agents; and/or
substances prone to auto-oxidation.

10. Microcapsules suitable for storage comprising a polymer material based on one or more modified hydrocolloids as defined in one of claims 1 to 7.

11. Process for preparing microcapsules, characterised in that one of the modified hydrocolloids defined in claims 1 to 6 is subjected to coacervation and subsequent polymerisation or cross-linking, in the presence of the material which is to be encapsulated and optionally in the presence of conventional additives, in an aqueous medium.

12. Process according to claim 11, characterised in that the microcapsules are additionally hardened.

13. Process according to claim 12, characterised in that dual hardening or cross linking is carried out.

14. Process according to one of claims 11 to 13, characterised in that subsequent hardening and drying of the microcapsule walls are carried out by dehydration in conditioned air with a relative humidity of ≤ 50% and at temperatures of between 20° and 100°C.

15. Microcapsules suitable for storage, obtainable by a process according to one of claims 11 to 14.

## Revendications

1. Utilisation d'un ou plusieurs hydrocolloïdes modifiés ayant une teneur ≥ 0,1% en masse (% m) de groupes polymérisables ou réticulables de formule générale 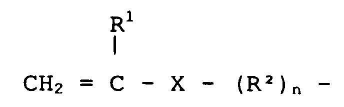 dans laquelle
X représente -COO-, -CONH-, -O- ou -NR³- ;
R¹ représente un atome d'hydrogène ou un résidu alkyle en C₁ à C₄ ;
R² représente un résidu éthylène, propylène ou butylène substitué par un groupe hydroxyle ;
R³ représente un atome d'hydrogène, un groupe hydroxyle ou un résidu alkyle en C₁ à C₄ et
n vaut 1 ;
ces groupes étant liés au squelette de l'hydrocolloïde par un élément de liaison et l'hydrocolloïde étant choisi parmi un polypeptide provenant du collagène ; les caséines ; les protéines du lait et les protéines végétales ou un de leurs hydrolysats, pour la préparation de microcapsules.

2. Utilisation selon la revendication 1, dans laquelle X représente -COO- ou -O- dans la formule I.

3. Utilisation selon la revendication 1 ou 2, dans laquelle les groupes polymérisables ou réticulables proviennent de l'acrylate de glycidyle ou du méthacrylate de glycidyle.

4. Utilisation selon l'une quelconque des revendications précédentes, dans laquelle l'élément de liaison avec le squelette de l'hydrocolloïde est un groupe choisi parmi -COO-, -O-, -S- et -NR⁴-.

5. Utilisation selon l'une quelconque des revendications précédentes, dans laquelle l'hydrocolloïde est choisi parmi la gélatine, les colles animales, le collagène et les protéines du soja ou un de leurs hydrolysats.

6. Utilisation selon l'une quelconque des revendications précédentes, dans laquelle au moins 10 groupes réticulables pour 1000 motifs d'acides aminés sont présents dans l'hydrocolloïde.

7. Utilisation selon l'une quelconque des revendications précédentes, dans laquelle sont utilisés en plus des hydrocolloïdes non fonctionnalisés.

8. Utilisation selon l'une quelconque des revendications précédentes pour emballer des matières de travail et des systèmes dangereux, toxiques, combustibles, auto-oxydables, volatils, thermosensibles et/ou réactifs ou bien des médicaments.

9. Utilisation selon la revendication 8 pour emballer des composés polymérisables, en particulier des composés durcissables portant en particulier des groupes méthacryliques, allyliques et/ou vinyliques ; des composés réactifs, qui durcissent selon le principe de la polyaddition, en particulier les composés contenant des groupes époxydes et/ou isocyanates ;
des composés servant au durcissement ;
des substances adhésives et d'étanchéité réactives ; des substances sensorielles, odoriférantes et/ou odorantes ;
des substances colorantes et/ou des colorants ;
des agents d'expansion et des agents moussants ; et/ou
des substances sensibles à l'auto-oxydation.

10. Microcapsule stable à l'entreposage, constituée d'une matière polymère à base d'un ou plusieurs hydrocolloïdes modifiés tels que définis selon l'une quelconque des revendications 1 à 7.

11. Procédé pour préparer des microcapsules, caractérisé en ce que l'on soumet un des hydrocolloïdes modifiés définis selon les revendications 1 à 6, à une coacervation suivie par une polymérisation ou réticulation, en présence de la matière à encapsuler et éventuellement en présence d'additifs courants, dans un milieu aqueux.

12. Procédé selon la revendication 11, caractérisé en ce que l'on procède de plus à un durcissement des microcapsules.

13. Procédé selon la revendication 12, caractérisé en ce que l'on procède à un double durcissement ou réticulation.

14. Procédé selon l'une quelconque des revendications 11 à 13, caractérisé en ce que l'on procède à un post-durcissement et à un séchage des parois de microcapsule au moyen d'une déshydratation sous de l'air conditionné, ayant une humidité relative d'air ≤ 50% et à des températures comprises entre 20°C et 100°C.

15. Microcapsule stable à l'entreposage, pouvant être obtenue selon un procédé d'après l'une quelconque des revendications 11 à 14.
